# EUROPÄISCHE PATENTSCHRIFT

(11) **EP 1 663 761 B1**
(45) Veröffentlichungstag und Bekanntmachung des Hinweises auf die Patenterteilung: **17.10.2007**
(21) Anmeldenummer: 04764601.3
(22) Anmeldetag: 28.08.2004
(51) Int. Cl.: B62D 5/04, B60R 16/02, B60G 17/015

(54) **HILFSKRAFTLENKSYSTEM MIT ELEKTROMOTOR UND DAMIT AUSGESTATTETES FAHRZEUG**
POWER STEERING SYSTEM AND VEHICLE FITTED THEREWITH
SYSTEME DE DIRECTION ASSISTEE A MOTEUR ELECTRIQUE ET VEHICULE EQUIPE DE CE SYSTEME

(30) Priorität: 11.09.2003 DE 10341963
(43) Veröffentlichungstag der Anmeldung: 07.06.2006
(73) Patentinhaber: ZF Lenksysteme GmbH, 73527 Schwäbisch Gmünd (DE)
(72) Erfinder: MERZ, Johann, 73527 Schwäbisch Gmünd (DE)
(86) Internationale Anmeldenummer: PCT/EP2004/009627
(87) Internationale Veröffentlichungsnummer: WO 2005/028286

(56) Entgegenhaltungen:
- EP-A- 1 065 106
- EP-A- 1 302 371
- DE-A- 3 833 306
- DE-A- 10 053 335
- US-A- 4 653 601
- US-B1- 6 476 571

## Beschreibung

Die Erfindung betrifft eine Hilfskraftlenksystem mit einem hilfskraftunterstützenden Elektromotor nach dem Oberbegriff des Anspruchs 1 sowie ein damit ausgestattetes Fahrzeug.

Ein großer Teil der bekannten Hilfskraftlenksysteme arbeitet nach wie vor mit hydraulischen Servomotoren. Im zunehmenden Maße aber werden in den Fahrzeugen, auch in größeren Fahrzeugen, Hilfskraftlenksysteme eingesetzt, in denen ein Elektromotor die unterstützende Lenkkraft aufbringt. Solche Lenksysteme werden auch kurz Elektrolenkungen genannt. Üblicherweise wird der Elektromotor von der Bordnetzspannung des Fahrzeuges gespeist, die im PKW-Bereich derzeit noch immer 12 Volt beträgt, was einer Generatorspannung von etwa 14 Volt entspricht. Durch die wachsende Anzahl der in den Fahrzeugen integrierten elektrischen Antriebe und Verbrauchern, wie z.B. Stellmotoren, Heizelemente und Klimaanlage, wird die Bordnetzspannung zunehmend belastet. Das Problem verschärft sich durch den steigenden Leistungsbedarf bei einzelnen Komponenten. So müsste für die Elektrolenkung eines Mittelklasse-PKW eine max. Stromstärke von etwa 80 A bereit gestellt werden, wobei bei hohen dynamischen Belastungen ein kurzzeitiger Stromanstieg (Stromgradient) von 600 kA/sec und mehr auftreten kann. Es gibt daher intensive Überlegungen Fahrzeuge mit einem stärkeren Bordnetz, das z.B. eine Generatorspannung von 42 Volt aufweist, auszustatten. Dieses Vorhaben bedingt aber eine umfassende Umstellung aller betroffenen elektrischen Komponenten auf die höhere Spannung.

Alternativ dazu gibt es Überlegungen für ein zweites Bordnetz, das zusätzlich zu dem vorhandenen Bordnetz, eingerichtet werden soll. Dabei stellt sich die Frage, ob zwei gleich starke Bordnetze, mit z.B. zweimal 14 Volt, parallel betrieben werden sollten. Das hätte den Vorteil einer einheitlichen Spannungsgröße, so dass keine Spannungsumstellung erfolgen müsste. Allerdings wären die 14 Volt nach wie vor zu gering um größere Leistungen abdecken zu können. Würde man hingegen ein hybrides Konzept mit zwei verschiedenen Spannungen, z.B. mit 14 Volt und 42 Volt, wählen, dann wäre man mit einem beachtlichen Realisierungsaufwand konfrontiert. Auch aus für dem Bereich der Lenkungen gibt es konkrete Vorschläge, die in diese Richtung gehen:

Aus der DE 38 33 306 A1 ist eine Servolenkung bekannt, die über einen Elektromotor verfügt, der von einer höheren Spannung (48 Volt) als die Bordnetzspannung (12 Volt) gespeist wird. Beide Spannungen werden von einem Generator erzeugt, der entsprechend zwei Sätze von Ankerwicklungen aufweist. Somit ist diese Konstruktion des Generators aufwendig zu realisieren. Außerdem ist es besonders schwierig den Generator so zu gestalten, dass er zugleich den Anforderungen des Bordnetzes als auch denen des Elektromotors genügt. Damit ist aber die Energieversorgung des Elektromotors nicht völlig unabhängig von der Bordnetzversorgung.

Der Erfindung liegt die Aufgabe zugrunde, ein Lenksystem der eingangs genannten Art anzugeben, bei dem die Versorgung des Elektromotors mit elektrischer Energie unabhängig vom Bordnetz eingestellt und verändert werden kann. Außerdem soll ein mit einer solchen Lenkung ausgestattetes Fahrzeug angegeben werden.

Die Aufgabe wird mit einem Lenksystem mit den Merkmalen des Anspruchs 1 gelöst sowie durch ein damit ausgestattetes Fahrzeug mit den Merkmalen des nebengeordneten Anspruchs.

Demnach wird ein Hilfskraftlenksystem vorgeschlagen, bei dem ein Elektromotor mittels einer elektronischen Steuereinheit gesteuert wird und hilfskraftunterstützend auf die Zahnstange der Lenkung wirkt, wobei die Lenkung sich dadurch auszeichnet, dass die elektronische Steuereinheit von einer ersten Spannung gespeist wird, die auch das Bordnetz des Fahrzeugs versorgt, und dass der Elektromotor selbst von einer zweiten Spannung versorgt wird, die ein Generator erzeugt, der nicht mit dem Bordnetz verbunden ist. Dieser Generator speist den Elektromotor des Hilfskraftlenksystems und kann evtl. noch weitere elektromotorische Antriebe mit Strom versorgen, die außerhalb des Hilfskraftlenksystems angeordnet sind. Dies kann z. B. ein im Fahrwerk angeordneter aktiver Querstabilisator sein, den der Generator ebenfalls mittels der von ihm erzeugten zweiten Spannung speist.

Mit der Erfindung wird also sichergestellt, dass der die Lenkung antreibende Elektromotor und evtl. weitere Antriebsmotoren von einem Generator gespeist werden, der unabhängig vom Bordnetz arbeitet und dessen Ausgangsleistung von einer elektronischen Steuerung optimal auf die Elektromotoren benötigte Leistung abgepasst wird. Mit anderen Worten: Die erzeugte Generatorleistung wird optimal auf die Erfordernisse der elektrischen Motoren und Hilfsantriebe, insbesondere der elektrischen Lenkungsunterstützung, eingestellt und dynamisch adaptiert.

Vorteilhafter Weise geschieht das z. B. über ein von der elektrischen Steuereinheit gesteuertes Vorschaltgerät, dass die Einspeiseleistung für den Elektromotor einstellt. Es kann aber auch ein fremderregter Generator eingesetzt werden, dessen Erregung und damit dessen Ausgangsleistung von der elektrischen Steuereinheit direkt beeinflusst werden, so dass genau die von dem Elektromotor momentan benötigte Leistung erzeugt wird.

Diese und weitere bevorzugte Ausführungen der Erfindung ergeben sich aus den Unteransprüchen.

Die Erfindung wird nun näher beschrieben anhand von drei Ausführungsbeispielen und anhand der beiliegenden Zeichnung, die folgende schematische Darstellungen wiedergeben:
- Fig. 1: zeigt den Aufbau eines erfindungsgemäßen Hilfskraftlenksystems in einer ersten Ausführungsform; bei der die elektrische Steuereinheit das Vorschaltgerät des Elektromotors steuert;
- Fig. 2: zeigt in einem Teilausschnitt den Aufbau für eine zweite Ausführungsform mit einem fremderregten Generator, bei der die elektrische Steuereinheit das Vorschaltgerät und auch den Generator beeinflusst; und
- Fig. 3: zeigt in einem Teilausschnitt den Aufbau für eine dritte zweite Ausführungsform ohne Vorschaltgerät, bei der die elektrische Steuereinheit den fremderregten Generator beeinflusst.

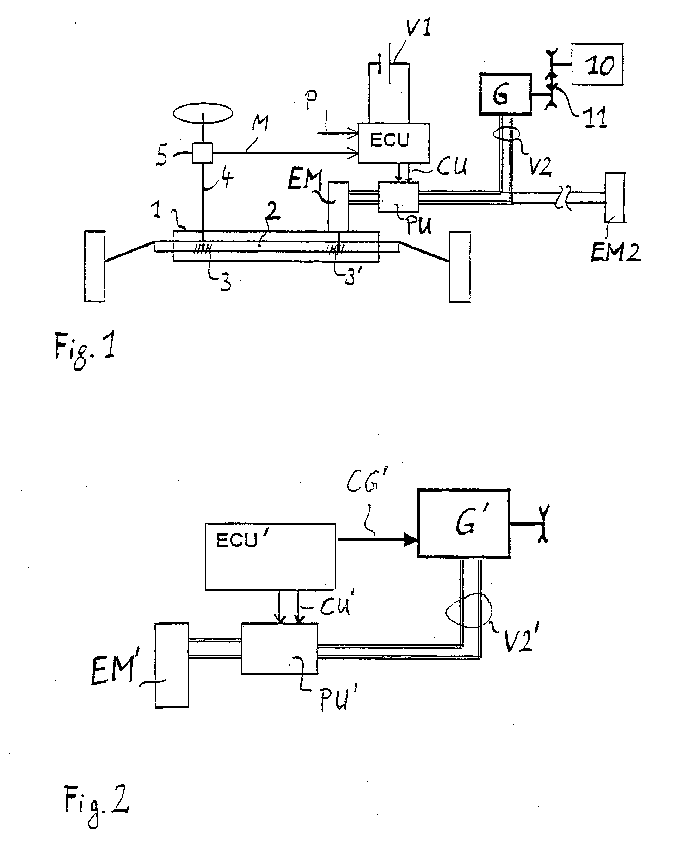

In der Fig. 1 ist als erstes Beispiel der Aufbau eines erfindungsgemäßes Hilfskraftlenksystem für ein Fahrzeug zu sehen, bei dem in einem Lenkgehäuse 1 eine axial verschiebbar angeordneten Zahnstange 2 angeordnet ist. In diese Zahnstange 2 greift ein Ritzel 3 kämmend ein, weiches mit einer Lenkspindel 4 wirkverbunden ist, über die die vom Fahrer aufgebrachte Lenkkraft übertragen wird. Zur Unterstützung dieser manuell aufgebrachten Kraft ist ein Elektromotor EM vorgesehen, der mittels einer elektronischen Steuereinheit ECU gesteuert wird und der hilfskraftunterstützend auf die Zahnstange 2 wirkt. Dazu wird mittels eines Drehmomentensensors 5 der an in die Lenksäule integrierten Drehstab befestigt ist, das manuell aufgebrachte Drehmoment M erfasst und als Eingangswert an eine elektrische Steuereinheit ECU übertragen. Die Steuereinheit vergleicht den Eingangswert mit Vergleichswerten, die in Form einer Kennlinie, Kennlinienfeld oder dergleichen, abgespeichert sind. Daraus werden Steuersignale für die Elektrolenkung berechnet, damit der Elektromotor EM eine möglichst optimale Hilfslenkkraft erzeugt.

In dem in Fig. 1 dargestellten Beispiel wird von der Steuereinheit ECU ein dem Elektromotor EM vorgeschaltete Leistungsstufe, das hier auch als Vorschaltgerät PU bezeichnet wird, angesteuert. Das geschieht mittels Steuersignalen CU, die die Steuereinheit ECU an das Vorschaltgerät PU sendet. Das Vorschaltgerät PU enthält steuerbare Leistungshalbleiter, die die von einem separaten Generator G erzeugte Spannung V2, die hier beispielsweise 24 Volt beträgt, in eine optimale Versorgungsspannung für den Elektromotor EM wandelt. Der separat angeordnete Generator G ist nicht mit dem Bordnetz, dessen Spannung V1 üblicherweise 12 Volt beträgt, gekoppelt, sondern erzeugt eine deutlich höhere Spannung V2, die den Leistungsbedarf des Elektromotor EM ausreichend abdecken kann, ohne dass das Bordnetz Einflüssen oder Störungen ausgesetzt ist. In diesem Beispiel wird als Generator G ein 24-Volt-Klauenpolgenerator eingesetzt, also ein Standardbautteil aus dem NKW-Bereich. Dadurch können Kosten gespart werden. Der Generator G wird über einen Riementrieb 11 von dem Verbrennungsmotor 10 des Fahrzeuges angetrieben. Das Steuergerät ECU selbst arbeitet mit der Bordnetzspannung, so dass auch hierfür kostengünstige Standardhardware verwendet werden kann.

Die Fig. 2 zeigt nun eine Variante der Erfindung, bei der ein fremderregter Generator G' eingesetzt wird, dessen Erregung von der Steuereinheit ECU' eingestellt und entsprechend den Anforderungen verändert wird. Das geschieht mittels einer Steuerspannung CG', die die Steuereinheit ECU erzeugt und in den Läuferkreis des Generators G' einspeist, um dort die gewünschte Erregung einzustellen. Es kann in diesem Beispiel eine recht hohe Generator-Spannung V2' von 100 Volt und mehr erzeugt werden. Daraus wandelt das ebenfalls von der Steuereinheit ECU angesteuerte Vorschaltgerät PU' eine für den Elektromotor EM' optimale Speisespannung. Dadurch dass der Generator G' eine recht hohe Spannung V2' erzeugt, steht ein großes Leistungspotential für die Versorgung des Elektromotors EM', insbesondere für die dynamische Steuerung des Elektromotors EM', zur Verfügung. Das Steuergerät ECU kontrolliert hierbei sowohl die Felderregung im Generator G' (mittels der Steuerspannung CG') als auch das Vorschaltgerät PU' (mittels der Steuersignale CU') und hat somit einen sehr flexiblen Steuerungszugriff auf das Gesamtsystem. Aus dem gesteuerten Generator G' können Leistungen von 3,5 kW und mehr gewonnen werden, so dass über den Elektromotor eine sehr große Hilfslenkunterstützung zu Verfügung gestellt werden kann. Dasselbe gilt für die zeitliche Leistungspitzen, die in hochdynamischen Fahrsituationen benötigt werden.

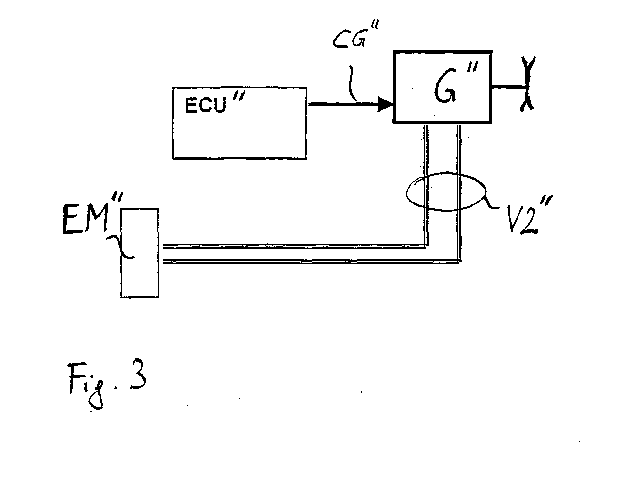

Als ein drittes Ausführungsbeispiel zeigt die Fig. 3 eine Ausführungsform, bei der der fremderregte Generator G" direkt, d.h. ohne Vorschaltgerät, mit dem Elektromotor EM" verbunden ist und diesem die benötigte elektrische Leistung liefert. Dazu erzeugt wird von der Steuereinheit ECU eine Steuerspannung CG" in den Läuferkreis des Generators G" eingespeist, so dass dort die gewünschte Felderregung sich einstellt, um die entsprechend hohe Generatorspannung V2" an den Elektromotor EM" zu liefern. Es handelt sich bei dieser Konstellation also um einen aufeinander abgestimmten und zentral von der Steuereinheit ECU kontrollierten Maschinensatz bestehend aus fremderregtem Generator G" und daran direkt angeschlossenem Elektromotor EM".

Die hier vorgeschlagenen Lösungen lassen sich vorteilhaft erweitern, indem die von dem Generator erzeugte Spannung, welche unabhängig vom Bordnetz ist, sowohl für den Elektromotor der Hilfskraftlenkung genutzt wird als auch für noch weitere außerhalb des Hilfskraftlenksystems angeordneten Elektromotoren oder elektromotorischen Antrieb, insbesondere für einen im Fahrwerk angeordneten aktiven Querstabilisator. Es hat sich gezeigt, dass im besonderen die gemeinsame Stromversorgung von Lenkungsmotor und Querstabilisator sehr vorteilhaft ist, weil diese beiden Verbraucher sich hinsichtlich des Energiebedarfs sich ideal ergänzen:

Denn der Leistungsbedarf für die Lenkung ist vor allem bei Langsamfahrt und im Stand des Fahrzeuges, etwa beim Parkieren, sehr groß. Hingegen ist der Leistungsbedarf für die Stabilisierung des Fahrzeuges, insbesondere für die Stabilisierung in Querlage, am größten, wenn das Fahrzeug sehr schnell fährt. Daher zeichnet sich eine solche Kombination durch einen ausgeglichenen Leistungsbedarf, was wiederum für die Ausnutzung des Generators vorteilhaft ist.

Das hier vorgeschlagene Hilfskraftlenksystem kann auch noch mit einer Schaltung versehen werden, die die folgende Zusatzfunktion ausführt:

Im Falle eines nur geringen Leistungsbedarfs, d,h. wenn nur eine geringe Lenkunterstützung benötigt wird, wird der Elektromotor an der Bordnetzspannung betrieben. Dies ist z.B. bei Geradeausfahrt der Fall. Erst im Falle eines höheren Leistungsbedarf, wie er in besonderem Maße beim Parkieren auftritt, wird der Elektromotor vom Bordnetz getrennt und mit dem Generator verbunden, der die zweite höhere Spannung versorgt. Dazu ist eine Schaltung vorgesehen, die den Leistungsbedarf des Elektromotors überwacht und entsprechend zwischen den Spannungen umschaltet.

Das bedeutet für die hier in den Fig. 1 und 2 gezeigten Beispielen, dass die elektronische Steuereinheit ECU erweitert wird, damit sie die erste Spannung V1 überwacht und mit einem vorgebbaren Mindestwert vergleicht. Die Steuereinheit ECU steuert ein Schaltgerät, hier z.B. das Vorschaltgerät PU, nun so, dass die erste Spannung V1 den Elektromotor EM speist, solange diese Spannung U1 über dem vorgebbaren Mindestwert liegt, und dass die zweite Spannung V2 den Elektromotor EM speist, sobald die erste Spannung V1 den vorgebbaren Mindestwert unterschreitet.

Eine alternative Lösung besteht darin, dass die elektronische Steuereinheit den durch den Elektromotor fließenden Versorgungsstrom überwacht und mit einem vorgebbaren Maximalwert vergleicht. Dann steuert die Steuereinheit das Vorschaltgerät so, dass die erste Spannung V1 den Elektromotor EM speist, solange der Versorgungsstrom unter dem vorgebbaren Maximalwert liegt, und dass die zweite Spannung V2 den Elektromotor EM speist, sobald der Versorgungsstrom den vorgebbaren Maximalwert überschreitet.

Die Erfindung wurde anhand von einigen Ausführungsbeispielen beschrieben, was jedoch keine Beschränkung des Schutzbegehrens bedeuten soll. Es sind zahlreiche weitere Varianten denkbar, die ebenfalls unter den durch die Erfindung erfassten Schutz fallen.

## Patentansprüche

1. Hilfskraftlenksystem für ein Fahrzeug mit einer in einem Lenkgehäuse (1) axial verschiebbar angeordneten Zahnstange (2), in die ein Ritzel (3) kämmend eingreift, das mit einer Lenkspindel (4) wirkverbunden ist, und mit einem Elektromotor (EM), der mittels einer elektronischen Steuereinheit (ECU) gesteuert wird und der hilfskraftunterstützend auf die Zahnstange (2) wirkt, wobei die von dem Elektromotor (EM) aufgebrachte Hilfskraft einem an der Lenkspindel auftretenden Drehmoment (M) folgt gemäß einer in der elektronischen Steuereinheit (ECU) gespeicherten Kennlinie, die elektronische Steuereinheit (ECU) von einer ersten Spannung (V1) gespeist wird, die auch das Bordnetz des Fahrzeugs versorgt, und dass der Elektromotor selbst von einer zweiten Spannung (V2) versorgt wird, die ein Generator (G) erzeugt, der nicht mit dem Bordnetz verbunden ist,
**dadurch gekennzeichnet, dass**
der Elektromotor ein Wechselstrommotor ist, der mit einem von der Steuereinheit gesteuertem Vorschaltgerät verbunden ist, und das die zweite von dem Generator erzeugte Spannung eine Wechselspannung ist, die über das Vorschaltgerät den Elektromotor speist.

2. Hilfskraftlenksystem nach Anspruch 1 **dadurch gekennzeichnet, dass** der Generator ein fremderregter Generator (G`) ist, der mit der elektronischen Steuereinheit (ECU') verbunden ist, und dass die Steuereinheit (ECU') die Fremderregung des Generators (G') steuert, um die erzeugte zweite Spannung (V2') zu variieren, und dass die Steuereinheit (ECU') das Vorschaltgerät (PU') steuert, um die erzeugte zweite Spannung (V2') in den Elektromotor (EM') einzuspeisen.

3. Hilfskraftlenksystem nach Anspruch 2, **dadurch gekennzeichnet, dass** der Generator ein fremderregter Mehrphasenstromgenerator (G') ist, dass der Elektromotor ein Mehrphasenstrommotor (EM'), und dass das Vorschaltgerät (PU') einen Matrixumrichter enthält, der die von dem Mehrphasenstromgenerator (G') erzeugten Phasenspanungen umrichtet in für in den Mehrphasenstrommotor einzuspeisende Phasenspannungen

4. Hilfskraftlenksystem nach Anspruch 1,
**dadurch gekennzeichnet, dass** die elektronische Steuereinheit (ECU) die erste Spannung (V1) überwacht und mit einem vorgebbaren Mindestwert vergleicht, und dass die Steuereinheit (ECU) ein Schaltgerät, insbesondere das Vorschaltgerät (PU), so steuert, dass die erste Spannung (V1) den Elektromotor (EM) speist, solange diese Spannung (U1) über dem vorgebbaren Mindestwert liegt, und dass die zweite Spannung (V2) den Elektromotor (EM) speist, sobald die erste Spannung (V1) den vorgebbaren Mindestwert unterschreitet.

## Claims

1. Power steering system for a vehicle having a toothed rack (2) which is arranged so as to be axially displaceable in a steering casing (1) and in which a pinion (3) engages in an intermeshing fashion, said pinion (3) being operatively connected to a steering spindle (4), and having an electric motor (EM) which is controlled by means of an electronic control unit (ECU) and acts on the toothed rack (2) in a way which supplies power assistance force, with the power assistance force which is applied by the electric motor (EM) following, in accordance with a characteristic curve stored in the electronic control unit (ECU), a torque (M) which occurs at the steering spindle, the electronic control unit (ECU) being fed by a first voltage (V1) which also supplies the on-board power system of the vehicle, and in that the electric motor itself is supplied by a second voltage (V2) which is generated by a generator (G) which is not electrically connected to the on-board power system, **characterized in that** the electric motor is an a.c. motor which is connected to a control gear which is controlled by the control unit, and **in that** the second voltage which is generated by the generator is an alternating voltage which feeds the electric motor via the control gear.

2. Power steering system according to Claim 1, **characterized in that** the generator is an externally excited generator (G') which is connected to the electronic control unit (ECU'), and **in that** the control unit (ECU') controls the external excitation of the generator (G') in order to vary the generated second voltage (V2'), and **in that** the control unit (ECU') controls the control gear (PU') in order to feed the generated second voltage (V2') into the electric motor (EM').

3. Power steering system according to Claim 2, **characterized in that** the generator is an externally excited multiphase current generator (G'), **in that** the electric motor contains a multiphase current motor (EM'), and **in that** the control gear (PU') contains a matrix converter which converts the phase voltages generated by the multiphase current generator (G') into phase voltages which are to be fed in for the multiphase current motor.

4. Power steering system according to Claim 1, **characterized in that** the electronic control unit (ECU) monitors the first voltage (V1) and compares it with a predefinable minimum value, and **in that** the control unit (ECU) controls a switching device, in particular the control gear (PU), in such a way that the first voltage (V1) feeds the electric motor (EM) as long as this voltage (U1) is above the predefinable minimum value, and **in that** the second voltage (V2) feeds the electric motor (EM) as soon as the first voltage (V1) drops below the predefinable minimum value.

## Revendications

1. Système de direction assistée pour un véhicule comprenant une crémaillère (2) disposée dans un boîtier de direction (1) de manière à pouvoir coulisser dans le sens axial, dans laquelle un pignon (3) vient en prise engrenée, lequel est en liaison active avec un arbre de direction (4), et comprenant un moteur électrique (EM) qui est commandé au moyen d'une unité de commande électronique (ECU) et agit sur la crémaillère (2) en apportant une force d'assistance, la force auxiliaire appliquée par le moteur électrique (EM) suivant un couple (M) produit au niveau de l'arbre de direction conformément à une courbe caractéristique enregistrée dans l'unité de commande électronique (ECU), l'unité de commande électronique (ECU) étant alimentée par une première tension (V1) qui alimente également le réseau de bord du véhicule et le moteur électrique lui-même étant alimenté par une deuxième tension (V2) qui est produite dans un générateur (G) qui n'est pas relié avec le réseau de bord, **caractérisé en ce que** le moteur électrique est un moteur à courant alternatif qui est relié avec un ballast commandé par l'unité de commande et que la deuxième tension produite par le générateur est une tension alternative qui alimente le moteur électrique par le biais du ballast.

2. Système de direction assistée selon la revendication 1, **caractérisé en ce que** le générateur est un générateur à excitation externe (G') qui est relié avec l'unité de commande électronique (ECU') et que l'unité de commande (ECU') commande l'excitation externe du générateur (G') pour faire varier la deuxième tension produite (V2') et que l'unité de commande (ECU') commande le ballast (PU) pour injecter la deuxième tension produite (V2') dans le moteur électrique (EM').

3. Système de direction assistée selon la revendication 2, **caractérisé en ce que** le générateur est un générateur polyphasé à excitation externe (G'), que le moteur électrique est un moteur à plusieurs phases (EM') et que le ballast (PU') contient un convertisseur à matrice qui convertit les tensions de phase générées par le générateur polyphasé (G') en tensions de phase à injecter dans le moteur à plusieurs phases.

4. Système de direction assistée selon la revendication 1, **caractérisé en ce que** l'unité de commande électronique (ECU) surveille la première tension (V1) et la compare avec une valeur minimale pouvant être prédéfinie et que l'unité de commande (ECU) commande un appareil de commutation, notamment le ballast (PU) de telle sorte que la première tension (V1) alimente le moteur électrique (EM) tant que cette tension (U1) est supérieure à la valeur minimale pouvant être prédéfinie et que la deuxième tension (V2) alimente le moteur électrique (EM) dès que la première tension (V1) devient inférieure à la valeur minimale pouvant être prédéfinie.
